# EUROPEAN PATENT SPECIFICATION

(11) **EP 0 317 003 B1**
(45) Date of publication and mention of the grant of the patent: **03.11.1993**
(21) Application number: 88202525.7
(22) Date of filing: 10.11.1988
(51) Int. Cl.: C08G 67/02

(54) **Polyketone polymers**
Polyketone
Polycétones

(30) Priority: 12.11.1987 NL 8702705
(43) Date of publication of application: 24.05.1989
(73) Proprietor: SHELL INTERNATIONALE RESEARCH MAATSCHAPPIJ B.V., 2596 HR Den Haag (NL)
(72) Inventor: Drent, Eit, NL-1031 CM Amsterdam (NL)

(56) References cited:
- EP-A- 0 222 454
- EP-A- 0 253 416
- EP-A- 0 301 664
- US-A- 3 689 460
- US-A- 3 694 412
- J. March, "Advanced Organic Chemistry", 3rd.Ed., John Wiley & Sons (1985), p.319
- S.H. Pine, J.B. Hendrickson, D.J. Cram and G.S.Hammond "Quimica Organica", 4th.Ed. McGraw Hill (1982), p.255.

## Description

The invention relates to novel polymers of carbon monoxide with one or more olefinically unsaturated hydrocarbons, often referred to as polyketones.

Linear polymers of carbon monoxide with one or more alpha-olefins (for the sake of brevity referred to as A) in which the monomer units occur alternately and which therefore consist of units of the general formula -(CO)-A'- in which A' represents a monomer unit derived from a monomer A used, can be prepared by using catalyst compositions on the basis of
a) a palladium compound,
b) an anion of an acid with a pKa of less than 4, and
c) a phosphorus bidentate ligand of the general formula R₁R₂P-R-PR₃R₄, wherein R₁, R₂, R₃ and R₄ represent the same or different hydrocarbyl groups and R represents a bivalent organic bridging group containing at least two carbon atoms in the bridge.

According to EP-A-222454, the preparation of the polymers by using the above-described catalyst compositions may be carried out by contacting the monomers at an elevated temperature and presure with a solution of the catalyst composition in a protic polar diluent in which the polymers are insoluble or virtually insoluble. The use of ketone and ethylene glycol diacetate containing diluents in the preparation of the polymers is the subject matter of the earlier non-prepublished patent applications EP-A-253416 and EP-A-301664. During the polymerization, the polymers are obtained in the form of a suspension in the diluent. After the desired degree of polymerization is reached, the polymerization is generally terminated by cooling and releasing the pressure. The polymers can be isolated from the suspension for instance by means of filtration or centrifugation. Lower aliphatic alcohols, such as methanol, have been found to be very suitable protic polar diluents. The type of diluent used has an effect on the terminal groups occurring in the polymers. Thus, when carbon monoxide is polymerized with ethene in methanol as the diluent, using the above-mentioned catalyst compositions, the resulting polymers are substantially of formula CH₃-CH₂-CO-(CH₂CH₂-CO-)ₙ-CH₂-CH₂-CO-OCH₃, i.e. they are mainly polymers whose molecules bear an alkyl keto group at one end and an alkyl ester group at the other end. With a view to the possible uses of the polymers, it is desirable that either one of the terminal groups in at least part of the polymer molecules should contain an olefinically unsaturated double bond, so that the polymers can be suitably used as a component in radical polymerization processes with olefinically unsaturated monomers or with olefinically unsaturated polymers.

The Applicant has carried out an investigation into the preparation of such polymers. Conversion of the alkyl ester groups which occur in the polymers as terminal groups into hydroxyl groups by means of catalytic hydrogenation followed by catalytic dehydration is not a suitable route to the introduction of an olefinically unsaturated double bond into either one of the terminal groups of the polymer molecules. Owing to various side reactions - for instance with the carbonyl groups present in the polymer chain - a polymer mixture will be formed in which much of the linearity of the polymers is lost, while the introduction of an olefinically unsaturated double bond into either of the two terminal groups of the polymer molecules remains minimal.

Surprisingly, it has now been found that the above-mentioned palladium/phosphorus bidentate ligand catalyst compositions can be used to prepare polymers which are closely related to the carbon monoxide/alpha-olefin polymers mentioned hereinbefore but in which at least part of the polymer molecules contain an olefinically unsaturated double bond in either one of the terminal groups, namely when the polymerization is carried out in a diluent consisting for more than 50 %v of one or more aprotic polar compounds which are neither ketones nor ethylene glycol diacetate. Thus, the polymerization of carbon monoxide with ethene in dimethyl sulphoxide as the diluent and using catalyst compositions as mentioned hereinbefore will lead mainly to polymers which can be represented by the formula
CH₃-CH₂-CO-(CH₂CH₂-CO-)ₙ-CH₂-CH₂-CO-CH=CH₂, i.e. mainly polymers whose molecules bear an alkyl keto group at one end and a vinyl keto group at the other end.

Recapitulating, the polymers to which the present invention relates may be defined as follows
a) they have been prepared by polymerization of carbon monoxide with one or more alpha-olefins (A),
b) they have a linear structure,
c) they are made up of units of the formula -(C)-A'- wherein A' represents a monomer unit derived from a monomer A used, and
d) more than 25% of the polymer molecules contain an olefinically unsaturated double bond in either of the two terminal groups.

Polymers that satisfy the criteria a)-d) are novel polymers.

The present patent application therefore relates to novel polymers of carbon monoxide with one or more olefinically unsaturated hydrocarbons, which polymers satisfy the criteria a)-d) mentioned hereinbefore. The patent application further relates to the preparation of these polymers.

Preferably, more than 40% of the polymer molecules, of the polymers of the invention contain an olefinically unsaturated double bond in either of the two terminal groups.

The alpha-olefins used in the preparation of the polymers of the invention preferably contain at most 10 carbon atoms in the molecule. Exemplary alpha-olefins which can be suitably used in the preparation of the polymers of the invention are ethene, propene and butene-1. Preferably, the polymers are prepared from a monomer mixture which, in addition of carbon monoxide, includes only one alpha-olefin, ethene in particular.

For the preparation of the polymers of the invention it is preferred to use the palladium/phosphorus bidentate catalyst compositions mentioned hereinbefore. The palladium compound used in these catalyst compostions as component a) is preferably a palladium salt of a carboxylic acid and in particular palladium acetate.

As examples of acids with a pKa of less than 4 (determined in aqueous solution at 18°C) whose anions should be present in the catalyst compositions as components b) may be mentioned, for instance, mineral acids such as perchloric acid, sulphuric acid, phosphoric acid and nitrous acid, sulphonic acids such as 2-hydroxypropane-2-sulphonic acid, para-toluenesulphonic acid, methanesulphonic acid and trifluoromethanesulphonic acid, and carboxylic acids such as trifluoroacetic acid, trichloroacetic acid, dichloroacetic acid, difluoroacetic acid, tartaric acid and 2,5-dihydroxybenzoic acid. As component b), the catalyst composition preferably contains an anion of an acid with a pKa of less than 2 and in particular an anion of a sulphonic acid, such as para-toluenesulphonic acid, or an anion of a carboxylic acid such as trifluoro acetic acid. Preferably, component b) is present in the catalyst compositions in a ratio of from 0.5 to 200 and in particular of from 1.0 to 100 equivalents per gram atom of palladium. Component b) may be incorporated in the catalyst compositions both in the form of an acid and in the form of a salt. Eligible salts include non-noble transition metal salts. When a salt of a non-noble transition metal is used as component b), preference is given to a copper salt, especially a cupric salt. Optionally, components a) and b) may be combined in a single compound. An example of such a compound is palladium para-tosylate.

In the phosphorus bidentate ligands of the general formula R₁R₂P-R-PR₃R₄ which can be used in the catalyst compositions as components c), the hydrocarbon groups R₁, R₂, R₃ and R₄ preferably represent aryl groups. Further preference is given to phosphorus bidentate ligands in which the groups R₁, R₂, R₃ and R₄ are the same. Preferably the bridging groups R contains 3 atoms in the bridge, at least two of which are carbon atoms. Examples of suitable bridging groups R are the -CH₂-CH₂-CH₂- group, the -CH₂-C(CH₃)₂-CH₂- group, the -CH₂-Si(CH₃)₂-CH₂- group and the -CH₂-C(R₅)(R₆)-CH₂- group in which R₅ represents a methyl group and R₆ a diphenyl-phosphino-methyl group. A very suitable phosphorus bidentate ligand is 1,3-bis(diphenyl-phosphino) propane. The phosphorus bidentate ligands are preferably used in the catalyst compositions in a ratio of 0.1-3 and in particular of 0.75-2 mol per mol of palladium compound.

The preparation of the polymers of the invention by using the palladium/phosphorus bidentate ligand catalyst compositions described hereinbefore should be carried out in a diluent which consists for more than 50 %v of one or more aprotic polar compounds which are neither ketones nor ethylene glycol diacetate. Preferably, the diluent used consists for more than 75 %v of one or more aprotic polar compounds. Examples of suitable aprotic polar diluents are dimethylsulphoxide, N-methylpyrrolidone, N,N-dimethylacetamide and acetonitriles. Preferred aprotic polar diluents are dimethylsulphoxide and N-methylpyrrolidone. In addition to one or more aprotic polar compounds, the diluent used may also contain one or more other compounds. Examples of such compounds are alcohols, such as isopropanol, and ketones, such as acetone. The amounts of palladium/phosphorus bidentate ligand catalyst composition used in the preparation of the polymers of the invention may vary within wide ranges. Per mol of olefinically unsaturated compound to be polymerized, such a quantity of catalyst is preferably used as to contain from 10⁻⁷ to 10⁻³ and in particular from 10⁻⁶ to 10⁻⁴ gram atom of palladium. The molar ratio of the olefinically unsaturated compounds relative to carbon monoxide is preferably 10:1-1:5 and in particular 5:1-1:2.

The preparation of the polymers of the invention by using a palladium/phosphorus bidentate ligand catalyst is preferably carried out at a temperature of 20-200°C and a pressure of 1-200 bar and in particular at a temperature of 30-150°C and a pressure of 20-100 bar. The carbon monoxide used in the polymer preparation of the invention need not be pure. It may contain such contaminants as hydrogen, carbon dioxide and nitrogen. The polymerization may be carried out either batch wise or continuously.

The invention is now illustrated with the aid of the following examples.

### Example 1

A carbon monoxide/ethene copolymer was prepared as follows. A stirred autoclave of 250 ml content was charged with a catalyst solution comprising
50 ml of dimethyl sulphoxide,
0.1 mmol of palladium acetate,
2 mmol trifluoroacetic acid, and
0.15 mmol of 1,3-bis(diphenyl-phosphino) propane.

After air present in the autoclave was removed by evacuation, compressed ethene was let in until a pressure of 20 bar was reached, followed by carbon monoxide until a pressure of 50 bar was reached. Next, the contents of the autoclave were brought to 80°C. After 5 hours the polymerization was terminated by cooling to room temperature and releasing the pressure. The copolymer formed was filtered off, washed with methanol and dried in vacuo at room temperature.

The polymerization rate was 160 g copolymer/g Pd.hour.

### Example 2

A carbon monoxide/ethene copolymer was prepared substantially in the same way as the copolymer of Example 1, except for the following differences
a) the catalyst solution comprised a mixture of 50 ml of N-methyl-pyrrolidone and 5 ml of isopropyl alcohol instead of 50 ml of dimethyl sulphoxide, and
b) the reaction time was 3 hours instead of 5 hours.

The polymerization rate was 460 g copolymer/g Pd.hour.

### Example 3

A carbon monoxide/ethene copolymer was prepared substantially in the same way as the copolymer of Example 1, except that the catalyst solution used included 50 ml of N-methyl-pyrrolidone instead of 50 ml of dimethylsulphoxide.

The polymerization rate was 360 g copolymer/g Pd.hour.

### Example 4

A carbon monoxide/ethene copolymer was prepared substantially in the same way as the copolymer of Example 1, except for the following differences
a) the catalyst solution comprised a mixture of 50 ml of N-methyl-pyrrolidone and 10 ml of acetone instead of 50 ml of dimethyl-sulphoxide, and
b) the reaction time was 1 hour instead of 5 hours.

The polymerization rate was 740 g copolymer/g Pd.hour.

### Example 5

A carbon monoxide/ethene copolymer was prepared substantially in the same way as the copolymer of Example 1, except for the following differences
a) the catalyst solution comprised a mixture of 50 ml of N-methyl-pyrrolidone and 5 ml of isopropanol instead of 50 ml of dimethyl-sulphoxide, and 0.5 mmol of para-toluenesulphonic acid instead of 2 mmol of trifluoroacetic acid, and
b) the reaction time was 2 1/2 hours instead of 5 hours.

The polymerization rate was 300 g copolymer/g Pd.hour.

With the aid of ¹³C-NMR analysis it was established that the carbon monoxide/ethene copolymers prepared in Examples 1-5 had a linear structure and were made up of units of the formula

-(CO)-(C₂H₄)-.

With the aid of ¹³C-NMR analysis it was further established that on average 70, 90, 100, 90, and 50%, respectively, of the polymer molecules of the polymers prepared according to Examples 1-5 contained an olefinically unsaturated double bond in either of the two terminal groups.

## Claims

1. Novel polymers of carbon monoxide with one or more olefinically unsaturated hydrocarbons, that
a) have been prepared by polymerization of carbon monoxide with one or more alpha-olefins (A),
b) have a linear structure, and
c) are made up of units of the formula -(CO)-A'- in which A' represents a monomer unit derived from a monomer A used, characterized in that
d) more than 25% of the polymer molecules contain an olefinically unsaturated double bond in either of the two terminal groups.

2. Polymers as claimed in claim 1, characterized in that more than 40% of the polymer molecules contain an olefinically unsaturated double bond in either of the two terminal groups.

3. Process for the preparation of polymers as defined in claim 1, in which a mixture of carbon monoxide with one or more alpha-olefins is polymerized by contacting the mixture with a catalyst composition on the basis of
a) a palladium compound,
b) an anion of an acid with a pKa of less than 4, and
c) a phosphorus bidentate ligand of the general formula R₁R₂P-R-PR₃R₄ wherein R₁, R₂, R₃ and R₄ represent the same or different hydrocarbyl groups and R represents a bivalent organic bridging group containing at least two carbon atoms in the bridge, characterized in that the catalyst composition is dissolved in a diluent which consists for more than 50 %v of one or more aprotic polar compounds which are neither ketones nor ethylene glycol diacetate.

4. Process as claimed in claim 3, characterized in that a catalyst composition is applied which is based on a palladium salt of a carboxylic acid such as palladium acetate, as component a), and an anion of an acid with a pKa of less than 2 as component b).

5. Process as claimed in claim 3 or 4, characterized in that a catalyst composition is applied which is based on an anion of a sulphonic acid, such as para-toluenesulphonic acid, or of a carboxylic acid, such as trifluoroacetic acid, as component b), and in that component b) is present in the catalyst composition in a ratio of from 1.0 to 100 equivalents per gram atom of palladium.

6. Process as claimed in one or more of claims 3-5, characterized in that a catalyst composition is used in which the groups R₁, R₂, R₃ and R₄ present in component c) represent the same aryl group, and in that component c) is present in the catalyst composition in a ratio of 0.75-2 mol per mol of palladium compound.

7. Process as claimed in one or more of claims 3-6, characterized in that a catalyst composition is used in which the bivalent bridging group R present in component c) contains three atoms in the bridge at least two of which are carbon atoms, such as the -CH₂-CH₂-CH₂- group in 1,3-bis(diphenyl-phosphino) propane.

8. Process as claimed in one or more of claims 3-7, characterized in that the diluent used consists for more than 75 %v of one or more aprotic polar compounds, such as dimethyl-sulphoxide or N-methylpyrrolidone.

9. Process as claimed in one or more of claims 3-8, characterized in that it is carried out at a temperature of 30-150°C, a pressure of 20-100 bar and a molar ratio of the olefinically unsaturated compounds relative to carbon monoxide in the mixture to be polymerized of 5:1-1:2, and in that per mol of olefinically unsaturated compound to be polymerized such a quantity of catalyst is used as to contain 10⁻⁶-10⁻⁴ gram atom of palladium.

## Patentansprüche

1. Neue Polymere von Kohlenmonoxid mit einer oder mehreren olefinisch ungesättigten Kohlenwasserstoffen, die
a) durch Polymerisation von Kohlenmonoxid mit einem oder mehreren alpha-Olefinen (A) hergestellt worden sind,
b) eine lineare Struktur aufweisen, und
c) aus Einheiten der Formel -(CO)-A'- bestehen, in welcher A' eine Monomereinheit darstellt, die von einem eingesetzten Monomer A abgeleitet ist, **dadurch gekennzeichnet**, daß
d) mehr als 25% der Polymermoleküle eine olefinisch ungesättigte Doppelbindung in einer der beiden endständigen Gruppen aufweisen.

2. Polymere wie in Anspruch 1 beansprucht, dadurch gekennzeichnet, daß mehr als 40% der Polymermoleküle eine olefinisch ungesättigte Doppelbindung in einer der beiden endständigen Gruppen aufweisen.

3. Verfahren zur Herstellung von Polymeren, wie in Anspruch 1 definiert, in welchem eine Mischung von Kohlenmonoxid mit einem oder mehreren alpha-Olefin(en) durch Kontaktieren der Mischung mit einer Katalysatorzusammensetzung auf Basis von
a) einer Palladiumverbindung,
b) einem Anion einer Säure mit einem pKa-Wert von weniger als 4, und
c) einem zweizähnigen Phosphor-Liganden der allgemeinen Formel R₁R₂P-R-PR₃R₄, in welcher R₁,R₂,R₃ und R₄ die gleichen oder verschiedene Kohlenwasserstoffgruppen darstellen, und R eine zweiwertige organische Brückengruppe mit mindestens 2 Kohlenstoffatomen in der Brücke darstellt, polymerisiert wird, dadurch gekennzeichnet, daß die Katalysatorzusammensetzung in einem Verdünnungsmittel gelöst ist, das zu mehr als 50 Volumenprozent aus einer oder mehreren aprotischen polaren Verbindung(en) besteht, die weder Ketone noch Ethylglykoldiacetat sind.

4. Verfahren wie in Anspruch 3 beansprucht, dadurch gekennzeichnet, daß eine Katalysatorzusammensetzung eingesetzt wird, die aus einem Palladiumsalz einer Carbonsäure, wie Palladiumacetat, als Komponente a), und einem Anion einer Säure mit einem pKa-Wert von weniger als 2 als Komponente b) besteht.

5. Verfahren wie in Anspruch 3 oder 4 beansprucht, dadurch gekennzeichnet, daß eine Katalysatorzusammensetzug eingesetzt wird, die auf einem Anion einer Sulfonsäure, wie para-Toluolsulfonsäure, oder einer Carbonsäure, wie Trifluoressigsäure als Komponente b) basiert, und daß die Komponente b) in der Katalysatorzusammensetzung in einem Verhältnis von 1,0 bis 100 Äquivalenten je Grammatom Palladium vorliegt.

6. Verfahren wie in einem oder mehreren der Ansprüche 3 bis 5 beansprucht, dadurch gekennzeichnet, daß eine Katalysatorzusammensetzung eingesetzt wird, in welcher die Gruppen R₁, R₂, R₃ und R₄, die in Komponente c) vorliegen, die gleiche Arylgruppe darstellen, und daß Komponente c) in der Katalysatorzusammen-Setzung in einem Verhältnis von 0,75 bis 2 Mol je Mol Palladiumverbindung vorliegt.

7. Verfahren, wie in einem oder mehreren der Ansprüche 3 bis 6 beansprucht, dadurch gekennzeichnet, daß eine Katalysatorzusammensetzung eingesetzt wird, in welcher die zweiwertige Brückengruppe R in Komponente c) 3 Atome in der Brücke enthält, von welchen mindestens 2 Kohlenstoffatome sind, wie die -CH₂-CH₂-CH₂-Gruppe in 1,3-Bis(diphenyl-phosphino)propan.

8. Verfahren ,wie in einem oder mehreren der Ansprüche 3 bis 7 beansprucht, dadurch gekennzeichnet, daß das eingesetzte Verdünnungsmittel zu mehr als 75 Volumenprozent aus einer oder mehreren aprotischen polaren Verbindung(en) besteht, wie Dimethylsulfoxid oder N-Methylpyrrolidon.

9. Verfahren, wie in einem oder mehreren der Ansprüche 3 bis 8 beansprucht, dadurch gekennzeichnet, daß es bei einer Temperatur von 30 bis 150°C, einem Druck von 20 bis 100 bar und einem Molverhältnis der olefinisch ungesättigten Verbindungen in bezug auf Kohlenmonoxid in der zu polymerisierenden Mischung von 5:1 bis 1:2 durchgeführt wird, und daß je Mol olefinisch ungesättigter zu polymerisierender Verbindung eine solche Menge an Katalysator eingesetzt wird, daß darin 10⁻⁶ bis 10⁻⁴ Grammatom Palladium enthalten sind.

## Revendications

1. Nouveaux polymères de monoxyde de carbone et d'un ou plus hydrocarbures à insaturation oléfinique, qui:
a) ont été préparés par polymérisation de monoxyde de carbone et d'une ou de plus d'une alpha-oléfine (A),
b) présentent une structure linéaire, et
c) sont réalisés en motifs de formule ((CO)-A'- dans laquelle A' représente un motif monomère dérivé d'un monomère A utilisé, caractérisé en ce que,
d) plus de 25% des molécules de polymère renferment une double liaison à insaturation oléfinique dans l'un ou l'autre des deux groupes terminaux.

2. Polymères tels que revendiqués dans la revendication 1, caractérisés en ce que plus de 40% des molécules de polymère renferment une double liaison à insaturation oléfinique dans l'un ou l'autre des deux groupes terminaux.

3. Procédé pour la préparation des polymères tels que définis dans la revendication 1, dans lequel un mélange de monoxyde de carbone est d'une ou plus alpha-oléfine est polymérisé en mettant en contact le mélange avec une composition de catalyseur sur la base de :
a) un composé du palladium,
b) un anion d'un acide présentant un pKa inférieur à 4, et
c) un ligand bidenté du phosphore de la formule générale R₁, R₂-P-R-PR₃R₄, dans laquelle R₁, R₂, R₃ et R₄ représentent des groupes hydrocarbyle identiques ou différents et R représente un groupe pontant organique bivalent renfermant au moins deux atomes de carbone dans le pont, caractérisé en ce que la composition catalytique est dissoute dans un diluant qui est constitué au plus de 50% en volume d'un ou de plus d'un composé polaire aprotique qui ne sont ni des cétones ni du diacétate d'éthylène glycol.

4. Procédé tel que revendiqué dans la revendication 3, caractérisé en ce que l'on met en oeuvre la composition de catalyseur qui est à base d'un sel de palladium d'un acide carboxylique, tel que l'acétate de palladium, en tant que composant a), et un anion d'un acide présentant un pKa inférieur à 2 en tant que composant b).

5. Procédé tel que revendiqué dans la revendication 3 ou 4, caractérisé en ce qu'on met en oeuvre une composition de catalyseur qui est à base d'un anion d'acide sulfonique, tel que l'acide para-toluène sulfonique, ou d'un acide carboxylique, tel que l'acide trifluoroacétique, en tant que composant b), et que ce composant b) est présent dans la composition catalytique selon un rapport de 1,0 à 100 équivalents par atome-gramme de palladium.

6. Procédé tel que revendiqué dans l'une ou plus d'une des revendications 3 à 5, caractérisé en ce que l'on utilise une composition de catalyseur dans laquelle les groupes R₁, R₂, R₃ et R₄ présents dans le composant c) représentent le même groupe aryle, et que le composant c) est présent dans la composition de catalyseur selon un rapport de 0,75 à 2 moles par mole de composé du palladium.

7. Procédé tel que revendiqué dans une ou plus d'une des revendications 3 à 6, caractérisé en ce que l'on utilise une composition de catalyseur dans laquelle le groupe pontant bivalent R présent dans le composant c) renferme 3 atomes dans le pont, dont deux au moins sont des atomes de carbone, tels que le groupe -CH₂-CH₂-CH₂-dans le 1,3-bis(diphényl-phosphino) propane.

8. Procédé tel que revendiqué dans une ou plus d'une des revendications 3 à 7, caractérisé en ce que le diluant utilisé est constitué de plus de 75% en volume d'un ou de plus d'un composé polaire aprotique, tel que le diméthylsulfoxyde ou la N-méthylpyrrolidone.

9. Procédé tel que revendiqué dans l'une ou plus d'une des revendications 3 à 8, caractérisé en ce qu'il est mis en oeuvre à une température de 30 à 150°C, sous une pression de 20 à 100 bars et selon un rapport molaire des composés à insaturation oléfinique par rapport au monoxyde de carbone dans le mélange devant être polymérisé de 5:1 à 1:2, et que, par mole de composé à insaturation oléfinique devant être polymérisé, on met en oeuvre une quantité de catalyseurs telle qu'elle renferme 10⁻⁶ à 10⁻⁴ atomegramme de palladium.
